Europäisches Patentamt

European Patent Office

Office européen des brevets

(19)

(11) EP 0 561 681 B1

(12) **FASCICULE DE BREVET EUROPEEN**

(45) Date de publication et mention
de la délivrance du brevet:
**07.02.1996 Bulletin 1996/06**

(51) Int Cl.6: **G01D 5/14**, G01D 5/20,
G01B 7/30

(21) Numéro de dépôt: **93400649.5**

(22) Date de dépôt: **15.03.1993**

(54) **Procédé pour déterminer la position angulaire d'une sonde magnétique et capteur de position angulaire**

Verfahren zur Bestimmung der Winkellage einer Magnetsonde und Winkelmesseinrichtung

Method for determining the angular position of a magnetic transducer and angular position sensor

(84) Etats contractants désignés:
**DE ES GB IT**

(30) Priorité: **16.03.1992 FR 9203090**

(43) Date de publication de la demande:
**22.09.1993 Bulletin 1993/38**

(73) Titulaire: **MARELLI AUTRONICA**
**F-92000 Nanterre (FR)**

(72) Inventeurs:
• **Deschamps, Hervé**
**F-92150 Suresnes (FR)**

• **Raffoux, Jean-Paul**
**F-75020 Paris (FR)**

(74) Mandataire: **Martin, Jean-Jacques et al**
**F-75116 Paris (FR)**

(56) Documents cités:
EP-A- 0 308 656      FR-A- 1 134 381
US-A- 3 305 736

• **ELECTRONIC COMPONENTS &
APPLICATIONS vol. 8, no. 4, 1988, Eindhoven,
The Netherlands, pages 222-239, XP000213514,
August Petersen: 'The magnetoresistive
sensor, a sensitive device for detecting
magnetic-field variations'**

EP 0 561 681 B1

## Description

La présente invention concerne le domaine des capteurs de position angulaire, et plus particulièrement, mais non exclusivement, l'application d'un tel capteur au milieu automobile.

La tendance dans les véhicules automobiles modernes est d'asservir de plus en plus par l'électronique le fonctionnement des organes mécaniques mobiles. On cherche donc à disposer de capteurs électriques fiables pour suivre le déplacement de ceux-ci.

Les capteurs à piste résistive sont utilisés depuis longtemps dans ce but. Cependant, de tels capteurs présentent l'inconvénient d'avoir des contacts mobiles qui s'usent et qui résistent mal aux contraintes de température, d'humidité et de vibrations recontrées dans le milieu automobile.

On a proposé dans la publication EP-A-0 308 656 un capteur de position angulaire, sans contact entre les parties mobiles, conçu pour mesurer le déplacement angulaire d'un organe mécanique mobile, comprenant :

. des moyens de génération d'un champ magnétique tournant,
. une sonde magnétique susceptible d'être couplée mécaniquement audit organe en vue d'être entraînée en rotation autour d'un axe de mesure, cette sonde étant propre à délivrer un signal représentatif de l'écart angulaire entre une direction de référence de la sonde et ledit champ magnétique dans lequel celle-ci est placée, le champ magnétique décrivant un secteur angulaire contenant la direction de référence de la sonde quelle que soit l'orientation de celle-ci.

Ce capteur connu comporte une boucle à verrouillage de phase tendant à annuler un signal d'erreur représentatif du déplacement angulaire de la sonde. Le signal d'erreur pilote un oscillateur commandé en tension, relié à un compteur délivrant un signal numérique. Lorsque le signal d'erreur s'annule, la valeur numérique atteinte par le compteur correspond à la position angulaire de la sonde.

Un objet de l'invention est de proposer un capteur de position angulaire, sans contact entre les parties mobiles, qui soit particulièrement robuste, fiable et précis.

L'invention propose pour cela un capteur de position angulaire présentant les caractéristiques énoncées dans la revendication 1.

De préférence, les moyens de génération du champ magnétique tournant comprennent :

. un oscillateur délivrant un signal d'horloge,
. un compteur incrémenté par le signal d'horloge pour générer une suite de valeurs de comptage appartenant à un intervalle de comptage défini,
. des moyens de calcul, adaptés à générer pour chaque valeur de comptage des valeurs de fonctions trigonométriques,
. un convertisseur délivrant à partir desdites valeurs de fonctions trigonométriques des courants déphasés entre eux,
. une pluralité de bobinages, équipartis angulairement autour de l'axe de mesure, alimentés par lesdits courants déphasés de sorte que le champ magnétique résultant a une orientation dont l'angle dépend selon une loi connue de chaque valeur de comptage.

Dans un mode de réalisation préféré, on utilise. deux bobinages croisés d'axes perpendiculaires entre eux et à l'axe de mesure, alimentés par des courants sinusoîdaux déphasés de pi/2 entre eux.

De préférence, les moyens de calcul comprennent une mémoire adressée par le compteur, dans laquelle les valeurs de fonctions trigonométriques sont stockées.

Avantageusement, les moyens de délivrance du signal de sortie comprennent :

. un comparateur dont l'une des entrées est reliée à la sonde et l'autre reçoit un signal de référence prédéterminé,
. un circuit de mémorisation de la valeur de comptage du compteur, lorsque le signal délivré par la sonde est égal audit signal de référence, ce circuit de mémorisation étant adapté à délivrer cette valeur comme signal de sortie.

De préférence, il est en outre prévu un circuit pour synchroniser la mémorisation de la valeur de comptage sur un front du signal d'horloge de l'oscillateur.

Dans un mode de réalisation préféré, la sonde est une cellule à effet Hall ; le cas échéant, la sonde magnétique est un bobinage ou une magnétorésistance.

L'organe mécanique mobile est avantageusement un papillon de carburateur d'automobile ou l'arbre de rotation du bras d'une jauge de niveau de liquide.

L'invention a également pour objet un procédé pour déterminer la position angulaire d'une sonde magnétique, susceptible d'être entraînée en rotation autour d'un axe de mesure, et propre à délivrer un signal représentatif de l'écart angulalre entre une direction de référence de celle-ci et un champ magnétique tournant décrivant un secteur angulaire contenant ladite direction de référence quelle que soit l'orientation de la sonde, caractérisé en ce qu'il comprend les étapes consistant à :

. générer une suite de valeurs numériques dans un intervalle de valeurs défini,
. produire à partir de cette suite de valeurs numériques un champ magnétique tournant dont l'orientation est définie pour chaque valeur numérique,
. détecter lorsque le signal délivré par la sonde atteint un seuil prédéterminé pour lequel la direction de référence de la sonde a sensiblement la même orientation que le champ magnétique,

. produire comme signal de sortie la valeur numérique correspondant à l'orientation du champ magnétique pour laquelle le signal délivré par la sonde atteint ledit seuil prédéterminé,

. et répéter éventuellement les étapes précédentes en modifiant ledit intervalle de valeurs défini.

De préférence, cette suite de valeurs numériques est générée à l'aide d'un compteur binaire.

D'autres caractéristiques et avantages de l'invention apparaîtront à la lecture détaillée d'un exemple de réalisation non limitatif de l'invention qui va suivre et à l'examen du dessin annexé sur lequel :

- la figure 1 est une vue de dessus avec arrachement partiel montrant la sonde magnétique, illustrant de façon schématique la structure mécanique d'un capteur conforme à l'invention,
- la figure 2 est une vue de côté prise dans le plan de la vue de la figure 1,
- la figure 3 est un schéma illustrant la partie électronique associée à la partie mécanique d'un capteur selon l'invention,
- la figure 4 est un chronogramme illustrant l'allure des principaux signaux électriques lors du fonctionnement du capteur.

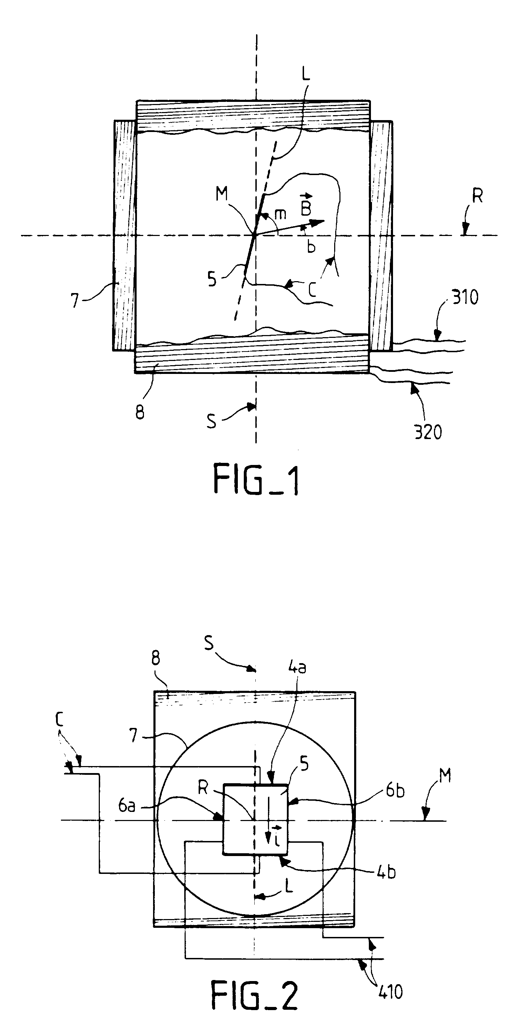

On a représenté sur les figures 1 et 2, de façon schématique, la partie mécanique d'un capteur conforme à l'invention. Ce capteur comprend une sonde magnétique 5 susceptible d'être entraînée en rotation autour d'un axe de mesure M, perpendiculaire au plan de la figure 1, et couplée, au moins lors du fonctionnement du capteur, à l'aide de moyens mécaniques connus et non représentés, à un organe mécanique mobile dont on désire connaître la position, par exemple l'arbre du bras d'une jauge de niveau de liquide ou un papillon de carburateur d'automobile.

Conformément à l'invention, la sonde magnétique 5 est susceptible de délivrer un signal électrique 410 représentatif de l'écart angulaire entre une direction de référence de la sonde et l'orientation d'un champ magnétique dans lequel la sonde est placée. On peut proposer de réaliser la sonde magnétique 5 à l'aide d'un bobinage, d'une magnétorésistance ou d'une cellule à effet Hall, connus en eux-mêmes. Bien que le nombre de fils de connexion soit réduit à deux dans le cas d'un bobinage ou d'une magnétorésistance, on préfèrera, comme représenté sur les figures 1 et 2, choisir comme sonde magnétique 5 une cellule à effet Hall reliée à quatre fils de connexion.

Cette cellule à effet Hall 5 a classiquement la forme d'un barreau allongé de section rectangulaire, que l'on dispose comme représenté, symétriquement par rapport à l'axe de mesure M et dont la direction longitudinale L fait un angle m avec un plan passant par l'axe de mesure M et un axe de référence R pour le champ magnétique B, cet axe de référence R étant perpendiculaire à l'axe de mesure M. On notera que l'axe longitudinal L est orienté perpendiculairement à l'axe de mesure M.

Si l'on se reporte plus particulièrement à la figure 2 qui est une vue de côté selon la direction de l'axe de référence R, on remarque que le barreau est alimenté en courant électrique par des fils de connexion C reliés à deux faces opposées 4a et 4b du barreau, de sorte que le courant électrique circule dans celui-ci dans la direction de l'axe longitudinal L.

En raison d'un phénomène physique connu sous le nom d'effet Hall, une différence de potentiel V apparaît sur des faces opposées 6a et 6b du barreau parallèles à l'axe L, proportionnelle à l'intensité du champ magnétique et au courant d'alimentation de la sonde par les fils de connexion C.

Plus précisément, si l'on désigne par i le vecteur courant électrique dans le barreau et par B le vecteur champ magnétique, la différence de potentiel V est proportionnelle au produit vectoriel de i par B, donc, dans l'exemple de réalisation décrit, de la forme :

$$V = k \cdot i \cdot B \cdot \sin(b-m).$$

On notera que cette différence de potentiel s'annule lorsque l'axe longitudinal L est aligné avec le vecteur champ magnétique B, ce qui conduit à choisir préférentiellement comme direction de référence pour la sonde magnétique 5 cet axe longitudinal L, pour s'affranchir d'éventuelles fluctuations des modules de k, i ou B.

On peut bien entendu proposer, au choix de l'homme de métier, d'incorporer le barreau dans un circuit intégré de mise en forme du signal produit par ce barreau, de façon à réduire avantageusement le nombre de fils de connexion à trois.

De préférence. conformément à l'invention, la sonde magnétique 5 est placée dans l'espace intérieur à plusieurs bobinages dont les axes sont de préférence équirépartis angulairement, propres à produire au niveau de la sonde magnétique 5 un champ magnétique tournant B autour de l'axe de mesure M, d'orientation connue à chaque instant.

Dans le mode de réalisation représenté sur les figures 1 et 2, le champ magnétique tournant B correspond à la somme des champs magnétiques produits par un bobinage 7 d'axe confondu avec l'axe de référence R et un bobinage 8 d'axe S coupant perpendiculairement l'axe R et l'axe de mesure M.

Conformément à l'invention, les deux bobinages 7 et 8, de préférence identiques, sont disposés symétriquement par rapport à l'axe de mesure M, et alimentés par des courants 310 et 320 déphasés entre eux de pi/2, donc de la forme $I_O \cos(b)$ et $I_O \sin(b)$.

Il va de soi que l'on peut proposer, sans sortir du cadre de l'invention, de produire un champ magnétique tournant en disposant un plus grand nombre de bobinages de préférence équirépartis angulairement autour de l'axe de mesure M, et alimentés par des courants déphasés entre eux de façon adéquate.

Avantageusement, on dispose l'ensemble des bobinages et la sonde de mesure dans une carcasse en matériau formant blindage magnétique.

On peut proposer dans une variante de réalisation de munir les bobinages 7 et 8 de noyaux magnétiques doux propres à concentrer les lignes de champ magnétique dans l'espace intérieur aux bobinages.

Dans ce cas, on tiendra compte d'un déphasage supplémentaire induit par les noyaux.

La partie mécanique du capteur qui vient d'être décrite est associée, conformément à l'invention, à une partie électronique propre à générer les courants 310 et 320 et à exploiter le signal 410 délivré par la sonde magnétique 5.

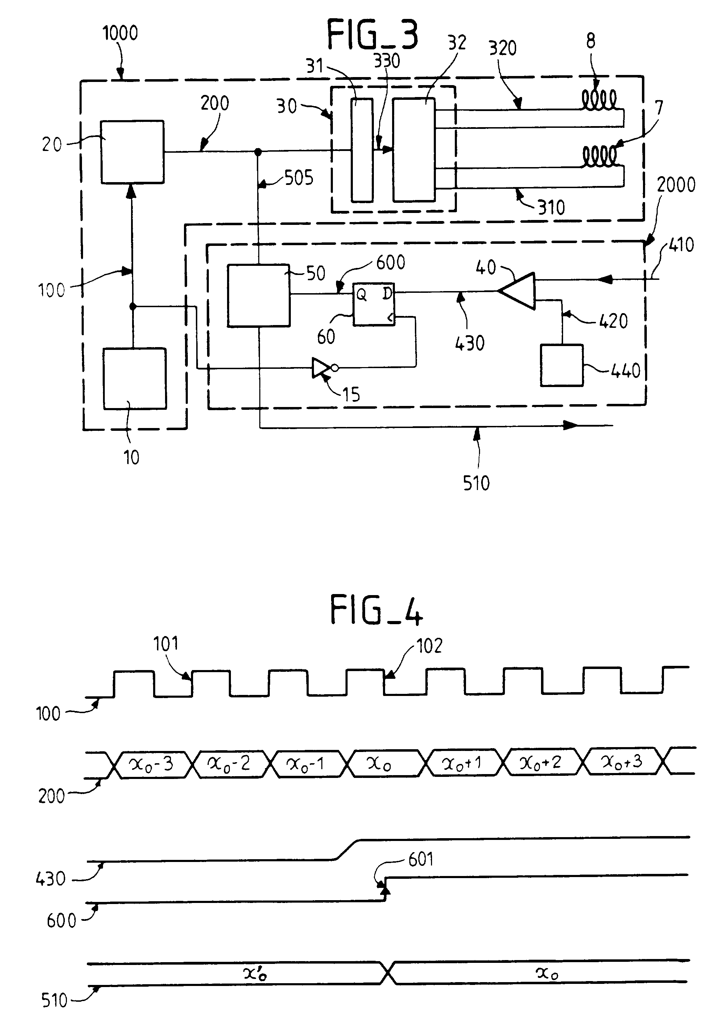

Cette partie électronique comporte principalement deux sous-ensembles, délimités par des pointillés sur la figure 3 :

. un sous-ensemble 1000 comprenant des moyens de génération des courants d'alimentation déphasés 310, 320 des bobinages 7 et 8, en vue de produire un champ magnétique tournant, et

. un sous-ensemble 2000 de délivrance d'un signal de sortie, représentatif de l'orientation du champ magnétique lorsque celui-ci s'aligne sensiblement avec une direction de référence de la sonde magnétique 5.

Le sous-ensemble 1000 comprend un oscillateur 10 délivrant un signal d'horloge 100 de fréquence f, de préférence un signal carré comme représenté sur le chronogramme de la figure 4. Un compteur binaire 20 reçoit le signal d'horloge 100 et s'incrémente sur chaque front montant 101 de celui-ci.

La valeur de comptage x du compteur 20 est accessible sur le bus de sortie 200 de celui-ci et délivrée à un circuit de conversion référencé dans son ensemble 30, adapté à générer les courants 310 et 320 d'alimentation des bobinages 7 et 8. Si l'on désigne par N le nombre de bits du compteur 20, les valeurs de comptage x appartiennent à l'intervalle de comptage $[0, 2^N - 1]$. N sera choisi en fonction de la précision souhaitée pour le capteur, en tenant compte notamment du temps de réponse maximal autorisé. On choisira typiquement un compteur 20 comptant sur une dizaine de bits. Pour obtenir une précision convenable, la fréquence f du signal d'horloge 100 doit être supérieure à $dm/dt \cdot 2^N / 2pi$, qui est de l'ordre de quelques kilohertz dans le cas de l'application du capteur à la mesure de l'angle de rotation d'un papillon de carburateur ou de l'arbre du bras d'une jauge de niveau de liquide.

Selon une caractéristique de l'invention, les bornes de l'intervalle de comptage $[0, 2^N -1]$ correspondent à une orientation connue du champ magnétique tournant B par rapport à l'axe de référence R. De préférence, le champ magnétique tournant B effectue un tour complet autour de l'axe de mesure M lorsque les valeurs de comptage x décrivent l'intervalle de comptage $[0, 2^N - 1]$, la borne 0 correspondant à un angle b égal à 0 et chaque incrémentation du compteur 20 correspondant à une augmentation de l'angle b d'un pas angulaire égal à $2.pi / 2^N$. Dans ce cas, les courants 310 et 320 d'alimentation des bobinages 7 et 8 sont de la forme :

$$I_o \cos (x \cdot 2pi / 2^N) \text{ et } I_o \sin (x \cdot 2pi / 2^N).$$

On peut proposer de réaliser la conversion des valeurs de comptage x en des courants déphasés d'alimentation 310, 320 des bobinages 7 et 8 de nombreuses façons.

De préférence, conformément à une réalisation préférée de l'invention, on procède à l'adressage par le bus de sortie 200 d'une mémoire 31 dans laquelle sont stockées les valeurs des fonctions trigonométriques $\sin (x \cdot 2.pi / 2^N)$ et $\cos (x \cdot 2.pi / 2^N)$ pour les différentes valeurs de comptage x possibles.

On prévoit alors, connecté au bus de sortie 330 de cette mémoire 31, un convertisseur 32, comprenant un convertisseur analogique / numérique et un amplificateur de courant non représentés, adapté à convertir ces valeurs de fonctions sinus et cosinus en des courants électriques 310 et 320 d'alimentation des bobinages 7 et 8.

Dans une variante de réalisation de l'invention, il est possible de générer à l'aide de la mémoire 31 des valeurs de la fonction trigonométrique $\sin (x \cdot 2 \cdot pi / 2^N)$ seulement, de façon à obtenir un courant 310 sinusoïdal et de générer ensuite à partir de celui-ci le courant 320 déphasé de pi/2 à l'aide d'un circuit de déphasage connu en lui-même. On peut également proposer, dans une autre variante de réalisation, d'obtenir la fonction cosinus à l'aide d'une mémoire ne contenant que les valeurs de fonction sinus par complément de l'adresse. On peut également proposer, le cas échéant, de remplacer la mémoire 31 par un calculateur effectuant en temps réel le calcul des valeurs des fonctions trigonométriques sinus et cosinus à partir des valeurs de comptage x.

L'homme de l'art comprendra aisément que le sous-ensemble 1000 permet de générer un champ magnétique tournant, qui balaye par incréments réguliers un secteur angulaire autour de l'axe de mesure M, et qu'ainsi, pour une valeur de comptage particulière $x_o$ le champ magnétique B va sensiblement s'aligner avec la direction de référence de la sonde magnétique 5.

Dans l'exemple de réalisation décrit, le signal 410 délivré par la sonde magnétique 5 s'annule lorsque b = m.

Il suffit donc de détecter cette annulation du signal 410 pour connaître avec précision l'orientation de la sonde magnétique 5 par rapport à l'axe de référence R, pour déduire ensuite, de façon connue, la position de l'organe mécanique mobile couplé à cette sonde magnétique.

Pour ce faire, on prévoit un sous-ensemble 2000 de délivrance d'un signal de sortie, comprenant un comparateur 40, dont l'entrée non-inverseuse reçoit le signal 410 tandis que l'entrée inverseuse est reliée à un circuit 440 délivrant un signal prédéterminé 420, correspondant dans l'exemple de réalisation décrit à la valeur du signal 410 lorsque sin(b-m) = 0, c'est-à-dire lorsque celle-ci s'annule. Il existe en fait deux valeurs de b, correspondant à deux orientations diamétralement opposées du champ magnétique, pour lesquelles sin(b-m) = 0, et le comparateur 40, représenté schématiquement sur la figure 3, comprend en outre un dispositif, non représenté, pour détecter l'égalité des signaux 410 et 420 sur un front montant ou descendant, au choix de l'homme de métier, du signal 410, de façon à ne détecter que l'une des deux valeurs de b possibles.

Le signal 420 peut, en variante, provenir d'une mémorisation du signal 410 délivré par la sonde magnétique 5 lors d'une phase d'initialisation du capteur, la direction de référence de la sonde pouvant alors être différente de celle de l'axe longitudinal L.

Conformément à l'invention, lorsque le comparateur 40 bascule, le compteur 20 a atteint une valeur de comptage particulière $x_o$ correspondant à une orientation connue du champ magnétique B.

Le sous-ensemble 2000 permet de délivrer un signal de sortie 510 représentatif de cette valeur $x_o$.

On a référencé 50 un registre ("latch" en anglais) dont le bus d'entrée 505 est relié au bus de sortie 200 du compteur 20, pour mémoriser la valeur de comptage $x_o$ sur un front montant 601 d'un signal de mémorisation 600, correspondant à un front descendant 102 du signal d'horloge 100. Pour ce faire il est prévu une bascule de type D, référencée 60, dont l'entrée D reçoit le signal de sortie 430 du comparateur 40, la sortie Q génère le signal de mémorisation 600 et l'entrée horloge reçoit le signal d'horloge inversé 100 au travers d'une porte inverseuse 15.

Ainsi, lors du front descendant 102 la valeur $x_o$ est mémorisée dans le registre 50 et remplace une valeur $x'_o$ précédemment mémorisée.

La valeur $x_o$ devient ainsi directement accessible par le port de sortie du registre 50, et constitue le signal de sortie 510.

On peut proposer d'autres variantes de réalisation conformes à l'invention.

Par exemple, on peut prévoir dans un premier temps de faire décrire au champ magnétique tournant B un secteur angulaire de 2pi radians, comme cela vient d'être décrit puis, une fois l'orientation de la sonde magnétique déterminée, affiner la mesure en ne balayant qu'un secteur angulaire réduit de part et d'autre de cette direction de référence. Le temps de réponse du capteur et sa précision peuvent ainsi être notablement améliorés.

Bien entendu, on peut proposer de générer le champ magnétique tournant à partir de tensions, et non plus de courants, asservies à des valeurs de fonctions trigonométrique générées comme précédemment décrit. Dans ce cas, on tiendra compte du temps de réponse des bobinages à l'attaque en tension, et du déphasage entre la tension et le courant.

Dans une variante de réalisation, on peut proposer de générer un champ magnétique tournant B prenant des orientations successives décalées angulairement d'une façon telle que l'orientation de la sonde magnétique puisse être déterminée par dichotomie.

On peut également proposer dans une variante de réalisation de générer un champ magnétique tournant B dont l'intensité varie, par exemple croît de façon impulsionnelle lorsque son orientation est proche de la direction de référence de la sonde, de façon à accroître la sensibilité.

Les bobinages sont alors soumis à une impulsion de courant électrique d'intensité élevée mais dont la durée est suffisamment courte pour éviter toute détérioration.

On peut également proposer de faire croître le courant d'alimentation de la sonde de façon impulsionnelle lorsque l'orientation du champ magnétique tournant est proche de la direction de référence de la sonde, de façon à accroître la sensibilité.

Finalement, un capteur conforme à l'invention s'avère particulièrement précis, fiable et robuste. Notamment, en opérant par détection de l'alignement du champ magnétique avec une direction de référence de la sonde, ce capteur est particulièrement peu sensible à des variations de paramètres tels que température, tolérances des composants. sensibilité de la sonde.

## Revendications

1. Capteur de position angulaire conçu pour mesurer le déplacement en rotation d'un organe mécanique mobile, comprenant :

   . des moyens de génération (1000) d'un champ magnétique tournant et

   . une sonde magnétique (5) susceptible d'être couplée mécaniquement audit organe en vue d'être entraînée en rotation autour d'un axe de mesure (M), cette sonde étant propre à délivrer un signal (410) représentatif de l'écart angulaire entre une direction de référence (L) de la sonde (5) et le champ magnétique (B), dans lequel celle-ci est placée, le champ magnétique (B) décrivant un secteur angulaire contenant la direction de référence (L) de la sonde (5), quelle que soit l'orientation de la sonde, caractérisé en ce que le champ magnétique est d'orientation connue à chaque instant et en ce qu'il est prévu des moyens de délivrance (2000) d'un signal de sortie (510) correspondant à l'orientation (b) du champ magnétique (B) lorsque le signal (410) délivré par la sonde (5) atteint une valeur prédéterminée pour laquelle la direction de référence (L) de la sonde (5) a sensiblement la même orientation que le champ magnétique (B).

2. Capteur selon la revendication 1, caractérisé en ce que ladite valeur prédéterminée correspond à l'annulation du signal délivré par la sonde.

3. Capteur selon la revendications 1 ou 2, caractérisé en ce que lesdits moyens de génération (1000) du champ magnétique tournant (B) comprennent:

- un oscillateur (10) délivrant un signal d'horloge (100),
- un compteur (20) incrémenté par le signal d'horloge (100) pour générer une suite de valeurs de comptage (x) appartenant à un intervalle de comptage défini,
- des moyens de calcul, adaptés à générer pour chaque valeur de comptage des valeurs de fonctions trigonométriques,
- un convertisseur (32) délivrant à partir desdites valeurs de fonctions trigonométriques des courants (310, 320) déphasés entre eux,
- une pluralité de bobinages (7, 8), équipartis angulairement autour de l'axe de mesure (M), alimentés par lesdits courants (310, 320) déphasés de sorte que le champ magnétique (B) résultant a une orientation dont l'angle (b) dépend selon une loi connue de chaque valeur de comptage (x).

4. Capteur selon la revendication 3, caractérisé en ce que les moyens de calcul comprennent une mémoire (31) adressée par le compteur, dans laquelle les valeurs de fonctions trigonométriques sont stockées.

5. Capteur selon la revendication 3 ou 4, caractérisé en ce que les moyens de délivrance (2000) du signal de sortie (510) comprennent :

- un comparateur (40) dont l'une des entrées est reliée à la sonde et l'autre reçoit un signal de référence (420) prédéterminé,
- un circuit de mémorisation (50) d'une valeur de comptage ($x_o$) du compteur (20), lorsque le signal délivré par la sonde (5) est égal audit signal (420) de référence, ce circuit de mémorisation (50) étant adapté à délivrer cette valeur ($x_o$) comme signal de sortie (510).

6. Capteur selon la revendication 5, caractérisé en ce qu'il comprend de plus un circuit (60) pour synchroniser la mémorisation de la valeur de comptage (x) sur un front (102) du signal d'horloge (100) de l'oscillateur (10).

7. Capteur selon l'une des revendications 1 à 6, caractérisé en ce que la sonde (5) est une cellule à effet Hall.

8. Capteur selon l'une des revendications 1 à 6, caractérisé en ce que la sonde (5) est un bobinage.

9. Capteur selon l'une des revendications 1 à 6, caractérisé en ce que la sonde (5) est une magnétorésistance.

10. Capteur selon l'une des revendications 1 à 9, caractérisé en ce que lesdits moyens de génération (1000) du champ magnétique tournant comprennent deux bobinages croisés d'axes (7, 8) perpendiculaires entre eux et à l'axe de mesure, alimentés par des courants sinusoïdaux (310, 320) déphasés de pi/2 entre eux.

11. Capteur selon l'une des revendications 1 à 10, caractérisé en ce que l'organe mécanique mobile est un papillon de carburateur d'automobile.

12. Capteur selon l'une des revendications 1 à 10, caractérisé en ce que l'organe mécanique mobile est l'arbre de rotation du bras d'une jauge de niveau de liquide.

13. Procédé pour déterminer la position angulaire d'une sonde magnétique (5), susceptible d'être entraînée en rotation autour d'un axe de mesure (M), et propre à délivrer un signal (410) représentatif de l'écart angulaire entre une direction de référence (L) de celle-ci et un champ magnétique (B) tournant décrivant un secteur angulaire contenant ladite direction de référence quelle que soit l'orientation de la sonde, caractérisé en ce qu'il comprend les étapes consistant à :

- générer une suite de valeurs numériques (x) dans un intervalle de valeurs défini,
- produire à partir de cette suite de valeurs numériques un champ magnétique (B) tournant dont l'orientation (b) est connue pour chaque valeur numérique (x),
- détecter lorsque le signal (410) délivré par la sonde atteint un seuil prédéterminé pour lequel la direction de référence de la sonde a sensiblement la même orientation que le champ magnétique,
- produire comme signal de sortie (510) la valeur numérique ($x_o$) correspondant à l'orientation (b) du champ magnétique (B) pour laquelle le signal (410) délivré par la sonde (5) atteint ledit seuil prédéterminé,
- et répéter éventuellement les étapes précédentes en modifiant ledit intervalle de valeurs défini.

14. Procédé selon la revendication 13, caractérisé en ce que la suite de valeurs numériques (x) est générée à l'aide d'un compteur binaire (20).

**Patentansprüche**

1. Winkelpositionsmeßfühler zum Messen der Drehversetzung eines mechanisch beweglichen Bauteils mit

- Einrichtungen (1000) zum Erzeugen eines Drehmagnetfeldes und
- einer Magnetsonde (5), die mechanisch mit dem Bauteil gekoppelt werden kann, damit sie um eine Meßachse (M) mitgedreht wird, welche Sonde ein Signal (410) abgeben kann, das den Winkelabstand zwischen einer Bezugsrichtung (L) der Sonde (5) und dem Magnetfeld (B) wiedergibt, in dem sie angeordnet ist, wobei das Magnetfeld (B) einen Winkelsektor beschreibt, der die Bezugsrichtung (L) der Sonde (5) enthält, wie auch immer die Ausrichtung der Sonde sein sollte, dadurch gekennzeichnet, daß das Magnetfeld eine Ausrichtung hat, die zu jedem Zeitpunkt bekannt ist, und daß Einrichtungen (2000) zum Abgeben eines Ausgangssignals (510) vorgesehen sind, das der Ausrichtung (b) des Magnetfeldes (B) entspricht, wenn das Signal (410), das von der Sonde (5) abgegeben wird, einen bestimmten Wert erreicht, für den die Bezugsrichtung (L) der Sonde (5) im wesentlichen die gleiche Ausrichtung wie das Magnetfeld (B) hat.

2. Meßfühler nach Anspruch 1, dadurch gekennzeichnet, daß der bestimmte Wert dem Verschwinden des von der Sonde abgegebenen Signals entspricht.

3. Meßfühler nach Anspruch 1 oder 2, dadurch gekennzeichnet, daß die Einrichtungen (1000) zum Erzeugen eines Drehmagnetfeldes (B)

- einen Oszillator (10), der ein Taktsignal (100) abgibt,
- einen Zähler (20), der durch das Taktsignal (100) aufzählt, so daß er eine Folge von Zählwerten (x) erzeugt, die in einem bestimmten Zählintervall auftreten,
- Recheneinrichtungen, die für jeden Zählwert trigonometrische Funktionswerte erzeugen können,
- einen Wandler (32), der von diesen trigonometrischen Funktionswerten ausgehend zueinander phasenverschobene Ströme (310, 320) abgibt, und
- mehrere Spulen (7, 8) umfaßt, die in gleichen Winkelabständen um die Messachse (M) angeordnet sind und mit den phasenverschobenen Ströme (310, 320) versorgt werden, derart, daß das sich ergebende Magnetfeld (B) eine Ausrichtung hat, deren Winkel (b) nach einem bekannten Gesetz von jedem Zählwert (x) abhängt.

4. Meßfühler nach Anspruch 3, dadurch gekennzeichnet, daß die Recheneinrichtungen einen Speicher (31) umfassen, der vom Zähler adressiert wird und in dem die trigonometrischen Funktionswerte gespeichert sind.

5. Meßfühler nach Anspruch 3 oder 4, dadurch gekennzeichnet, daß die Einrichtungen (2000) zum Abgeben des Ausgangssignals (510)

- einen Komparator (40), dessen einer Eingang mit der Sonde verbunden ist und dessen anderer Eingang ein bestimmtes Bezugssignal (420) empfängt, und
- eine Speicherschaltung (50) umfassen, die einen Zählwert ($x_o$) des Zählers (20) speichert, wenn das von der Sonde (5) abgegebene Signal gleich dem Bezugssignal (420) ist, wobei die Speicherschaltung (50) diesen Wert ($x_o$) als Ausgangssignal (510) abgeben kann.

6. Meßfühler nach Anspruch 5, dadurch gekennzeichnet, daß er weiterhin eine Schaltung (60) zum Synchronisieren der Speicherung des Zählwertes (x) mit der Vorderflanke (102) des Taktsignals (100) des Oszillators (10) umfaßt.

7. Meßfühler nach einem der Ansprüche 1 bis 6, dadurch gekennzeichnet, daß die Sonde (5) eine Halleffektzelle ist.

8. Meßfühler nach einem der Ansprüche 1 bis 6, dadurch gekennzeichnet, daß die Sonde (5) eine Spule ist.

9. Meßfühler nach einem der Ansprüche 1 bis 6, dadurch gekennzeichnet, daß die Sonde (5) ein Magnetwiderstand ist.

10. Meßfühler nach einem der Ansprüche 1 bis 9, dadurch gekennzeichnet, daß die Einrichtungen (1000) zum Erzeugen eines Drehmagnetfeldes zwei Spulen mit zwei zueinander und zur Messachse senkrechten Achsen (7, 8) umfaßt, die von sinusförmigen Strömen (310, 320) versorgt werden, zwischen denen eine Phasenverschiebung von $\pi/2$ besteht.

11. Meßfühler nach einem der Ansprüche 1 bis 10, dadurch gekennzeichnet, daß das mechanisch bewegliche Bauteil die Ventilklappe eines Vergasers eines Kraftfahrzeuges ist.

12. Meßfühler nach einem der Ansprüche 1 bis 10, dadurch gekennzeichnet, daß das mechanisch bewegliche Bauteil die Drehachse des Armes einer Messeinrichtung für den Pegel einer Flüssigkeit ist.

13. Verfahren zum Bestimmen der Winkelposition einer Magnetsonde (5), die um eine Messachse (M) in Drehung versetzt werden und ein Signal (410) abgeben kann, das den Winkelabstand zwischen einer Bezugsrichtung (L) der Sonde und einem Drehmagnetfeld (B) wiedergibt, das einen Winkelsektor beschreibt, der die Bezugsrichtung enthält, wie auch immer die Ausrichtung der Sonde ist, dadurch gekennzeichnet, daß es die Schritte umfaßt:

- Erzeugen einer Reihe von numerischen Werten (x) in einem bestimmten Werteintervall,
- ausgehend von dieser Folge von numerischen Werten Erzeugen eines Drehmagnetfeldes (B), dessen Ausrichtung (b) für jeden numerischen Wert (x) bekannt ist,
- Feststellen, wenn das Signal (410), das von der Sonde ausgegeben wird, einen bestimmten Schwellenwert erreicht, für den die Bezugsrichtung der Sonde im wesentlichen die gleiche Ausrichtung wie das Magnetfeld hat,
- Erzeugen des numerischen Wertes ($x_o$), der der Ausrichtung (b) des Magnetfeldes (B) entspricht, für die das Signal (410), das von der Sonde (5) ausgegeben wird, den bestimmten Schwellenwert erreicht, als Ausgangssignal und
- gegebenenfalls Wiederholen der vorhergehenden Verfahrensschritte, wobei das bestimmte Werteintervall modifiziert wird.

**14.** Verfahren nach Anspruch 13, dadurch gekennzeichnet, daß die Folge der numerischen Werte (x) mittels eines Binärrechners (20) erzeugt wird.

## Claims

**1.** An angular position sensor designed to measure the rotary displacement of a moving mechanical member, the sensor comprising:

- . means (1000) for generating a rotating magnetic field; and
- . a magnetic probe (5) suitable for being mechanically coupled to said member in order to be rotated about a measurement axis (M), said probe being suitable for delivering a signal (410) representative of the angular offset between a reference direction (L) of the probe (5) and the magnetic field (B) in which the probe is placed, the magnetic field (B) describing an angular sector containing the reference direction (L) of the probe (5) whatever the direction in which the probe is pointing, the sensor being characterized in that the magnetic field is of known orientation at all times, and in that means (2000) are provided for delivering an output signal (510) corresponding to the orientation (b) of the magnetic field (B) when the signal (410) delivered by the probe (5) reaches a predetermined value for which the reference direction (L) of the probe (5) is oriented in substantially the same direction as the magnetic field (B).

**2.** A sensor according to claim 1, characterized in that said predetermined value corresponds to a null in the signal delivered by the probe.

**3.** A sensor according to claim 1 or 2, characterized in that said means (1000) for generating the rotating magnetic field (B) comprise:

- . an oscillator (10) delivering a clock signal (100);
- . a counter (20) incremented by the clock signal (100) to generate a sequence of count values (x) lying in a defined count range;
- . calculation means suitable for generating values of trigonometric functions for each count value;
- . a converter (32) responding to said values of trigonometric functions to deliver currents (310, 320) that are mutually phase shifted; and
- . a plurality of coils (7, 8) uniformly distributed angularly around the measurement axis (M) and fed with said phase-shifted currents (310, 320) so that the orientation of the resultant magnetic field (B) is at an angle (B) that depends on each count value (x) in accordance with a known relationship.

**4.** A sensor according to claim 3, characterized in that the calculation means comprise a memory (31) addressed by the counter and in which the values of trigonometric functions are stored.

**5.** A sensor according to claim 3 or 4, characterized in that the means (2000) for delivering the output signal (510) comprise:

- . a comparator (40) having one of its inputs connected to the probe and its other input receiving a predetermined reference signal (420); and
- . a storage circuit (50) for storing a count value ($x_o$) from the counter (20) whenever the signal delivered by the probe (5) is equal to said referenced signal (420), said storage circuit (50) being adapted to deliver said value ($x_o$) as the output signal (510).

**6.** A sensor according to claim 5, characterized in that it further includes a circuit (60) for synchronizing storage of the count value (x) on an edge (102) in the clock signal (100) from the oscillator (10).

**7.** A sensor according to any one of claims 1 to 6, characterized in that the probe (5) is a Hall effect cell.

8. A sensor according to any one of claims 1 to 6, characterized in that the probe (5) is a coil.

9. A sensor according to any one of claims 1 to 6, characterized in that the probe (5) is a magnetoresistance.

10. A sensor according to any one of claims 1 to 9, characterized in that said means (1000) for generating a rotating magnetic field comprise two crossed coils (7, 8) having axes that are mutually perpendicular and perpendicular to the measurement axis, the coils being fed by sinewave currents (310, 320) that are mutually phase-shifted by $\pi/2$.

11. A sensor according to any one of claims 1 to 10, characterized in that the moving mechanical member is the butterfly valve member of a car carburetor.

12. A sensor according to any one of claims 1 to 10, characterized in that the moving mechanical member is the rotary shaft of the arm of a liquid level gauge.

13. A method of determining the angular position of a magnetic probe (5) capable of being rotated about a measurement axis (M) and suitable for delivering a signal (410) representative of the angular offset between a reference direction (L) of the probe and a rotating magnetic field (B) describing an angular sector containing said reference direction whatever the direction in which the probe is pointing, the method being characterized in that it comprises the following steps:

   . generating a sequence of digital values (x) over a defined range of values;
   . responding to said sequence of digital values to produce a rotating magnetic field (B) whose orientation (b) is known for each digital value (x);
   . detecting when the signal (410) delivered by the probe reaches a predetermined threshold for which the reference direction of the probe is oriented in substantially the same direction as the magnetic field;
   . producing as an output signal (510) the digital value ($x_o$) corresponding to the orientation (b) of the magnetic field (B) at which the signal (410) delivered the probe (5) reaches said predetermined threshold; and
   . optionally repeating the above steps while modifying said range of defined values.

14. A method according to claim 13, characterized in that the sequence of digital values (x) is generated by means of a binary counter (20).

FIG_1

FIG_2

# FIG_3

# FIG_4